# EUROPÄISCHE PATENTSCHRIFT

(11) **EP 0 413 267 B1**
(45) Veröffentlichungstag und Bekanntmachung des Hinweises auf die Patenterteilung: **12.11.1997**
(21) Anmeldenummer: 90115360.1
(22) Anmeldetag: 10.08.1990
(51) Int. Cl.: A01N 25/14

(54) **Wasserdispergierbare Granulate**
Water-dispersible granules
Granulés dispersibles dans l'eau

(30) Priorität: 14.08.1989 DE 3926800
(43) Veröffentlichungstag der Anmeldung: 20.02.1991
(73) Patentinhaber: Hoechst Schering AgrEvo GmbH, 13342 Berlin (DE)
(72) Erfinder: Röchling, Hans, Dr., D-6231 Bad Soden am Taunus (DE); Kocur, Jean, Dr., D-6238 Hofheim am Taunus (DE); Albrecht, Konrad, Dr., D-6233 Kelkheim/Taunus (DE)

(56) Entgegenhaltungen:
- EP-A- 378 985
- EP-A- 0 036 106
- EP-A- 0 135 963
- EP-A- 0 255 760
- WO-A-87/04595
- FR-A- 1 373 296
- US-A- 3 737 551
- US-A- 3 954 439
- WPI 87-032875
- WPI 87-25854

## Beschreibung

Die vorliegende Erfindung betrifft neue wasserdispergierbare Granulate zur Anwendung im Pflanzenschutz.

Pflanzenschutzmittel kommen hauptsächlich in Form von Spritzpulvern, emulgierbaren Konzentraten oder wässrigen Dispersionen in den Handel. Zur Herstellung von Spritzbrühen werden die Mittel in Wasser eingerührt.

Der Umgang mit diesen Zubereitungsformen ist nicht unproblematisch. So führen Herstellung und Anwendung von Spritzpulver-Formulierungen häufig zur Belästigung durch Staub.

Emulgierbare Konzentrate enthalten Lösungsmittel, die leicht entflammbar, hautreizend oder geruchsbelästigend sein können.

Dispersionen können bei langen Lagerzeiten schwer aufschüttelbare Sedimente bilden. Außerdem bestehen bei diesem Formulierungstyp oft Probleme bezüglich der Entsorgung der Verpackungsmaterialien.

Diese Nachteile haben die in Wasser dispergierbaren Granulate (kurz "WG" genannt) nicht, da sie frei fließend, staubarm und gut dosierbar sind. Sie lassen sich problemlos in Polyethylenbehältern, Klotzbodenbeuteln aus Verbundfolie (Papier/Aluminium/Kunststoff) oder Papptrommeln verpacken, die leicht zu entsorgen sind.

Zur technischen Herstellung von dispergierbaren Granulaten stehen zahlreiche Verfahren zur Verfügung (vgl. H.B. Ries "Granuliertechnik und Granuliergeräte" in Aufbereitungstechnik Nr. 3, 1970, S. 147 und M. Rosch und R. Probst in Verfahrenstechnik 9 (1975) S. 59 bis 64).

Insbesondere ist die Herstellung von wasserdispergierbaren Granulaten nach dem Wirbelschichtverfahren bekannt, das im Gegenstrom und im Gleichstrom betrieben werden kann.

Die US-A 3920442 und GB-A 1401304 sowie M. Rosch und R. Probst in Verfahrenstechnik 9 (1975) S. 59 beschreiben das Gegenstrom-Verfahren, während das Gleichstrom-Verfahren in EP-A 0026918, EP-A-0141436 und EP-A 0141437 sowie in Verfahrenstechnik 9 (1975), S. 61/62 beschrieben ist.

Um eine einwandfreie Anwendung zu gewährleisten, müssen wasserdispergierbare Granulate beim Eintragen in Wasser gut benetzt werden, möglichst spontan zerfallen und eine Suspension mit guter Schwebefähigkeit bilden.

Wichtigste Voraussetzung für die Verwendbarkeit eines wasserdispergierbaren Granulats in der Praxis ist jedoch eine ausreichende biologische Wirksamkeit. Es gibt eine Reihe von Wirkstoffen, die zur Erzielung ihrer optimalen biologischen Wirkung Zusätze von Netzmitteln benötigen. Diese Netzmittel sind meist flüssig. Ein Einsatz relativ großer Mengen dieser flüssigen Netzmittel in flüssigen Zubereitungen wie z. B. emulgierbaren Konzentraten bereitet meist keine Schwierigkeiten. Wenn jedoch diese Formulierungsart aus den obengenannten, umweltrelevanten Gründen durch eine WG-Formulierung ersetzt werden soll, so entstehen ganz erhebliche, technische Schwierigkeiten: die meist erforderlichen größeren Mengen an flüssigen Netzmitteln lassen sich nicht in die genannte Festformulierung einarbeiten.

In WPI 87-253 844 werden Feingranulate beschrieben, die 0,5 - 3,5 Gew.-% Wirkstoff (z. B. Glufosinate), 79-99 Gew.-% Harnstoff oder anorganisches Salz, wie Ammoniumsulfat und 0,5 - 13 Gew.-% weiterer Hilfsmittel, wie Tenside, Öladsorbentien und Bindemittel enthalten. Es handelt sich dabei um gebrauchsfertige Streugranulate, die als solche direkt auf die zu bekämpfenden Unkräuter aufgebracht werden.

EP-A-0255760 betrifft ein Verfahren zur Herstellung von Granulaten, die einen Pflanzenschutzmittel-Wirkstoff und ein Netzmittel enthalten. In den Beispielen wird ein wäßriger Brei beschrieben, der Glufosinate-Ammonium, Natriumsulfat und Ammonium-polyoxyethylen(10)-nonyl-phenylethersulfat enthält.

Es wurde nun gefunden, daß überraschenderweise bei Verwendung bestimmter fester Netzmittel und gegebenenfalls Ammoniumsalzen wasserdispergierbare Granulate herstellbar sind, deren anwendungstechnische Eigenschaften einwandfrei und deren biologische Wirkung im Vergleich zu emulgierbaren Konzentraten nicht beeinträchtigt und oft sogar verbessert sind.

Die Erfindung betrifft wasserdispergierbare, nach dem Gleich- oder dem Gegenstrom-Verfahren hergestellte Granulate, welche
a) 10 bis 80 % D, L-Glufosinate-ammonium oder L-Glufosinate-ammonium oder Mischungen dieser Wirkstoffe mit Diuron, Linuron, Monolinuron, Aminotriazol, Oxyfluorfen, Simazin, Diuron + Simazin oder den Sulfonylharnstoffen Hoe 75032, DPX T 6376, DPX L 5300 oder DPX M 6316;
b) 20 - 85 Gew.-% eines oder mehrerer fester Netzmittel aus der Gruppe enthaltend C₁₄-C₁₉-Olefinsulfonat und Alkyldiglykolethersulfat oder eines Gemisches aus Ammoniumsulfat und einem oder mehreren der vorstehenden festen Netzmittel; und
c) 0 bis 15 Gew.-% üblicher Formulierungsmittel, insbesondere aus der Gruppe der Inertstoffe, Füllmittel, Dispergiermittel, Bindemittel, Netzmittel, Penetrationsförderer, Klebmittel, Haftmittel und Antischaummittel
enthalten.

Glufosinate-ammonium (D,L-Phosphinothricin-ammonium), L-Phosphinothricinammonium, bei denen zur Verstärkung ihrer biologischen Wirksamkeit größere Mengen an Netzmitteln in den Formulierungen vorteilhaft sein können, gehören zu der Gruppe der Herbizide und Wachstumsregulatoren.

Ebenfalls gehören dazu Mischungen von D,L- oder L-Glufosinate-ammonium mit anderen Herbiziden, wie z. B. Diuron, Linuron Monolinuron, Aminotriazol, Oxyfluorfen, Simazin, Diuron + Simazin, und den Sulfonylharnstoffen, wie z. B. Hoe 75032, DPX T 6376 (Allyl^{(R)}, Gropper^{(R)}), DPX L 5300 (Granstar^{(R)}) und DPX M 6316 (Harmony^{(R)}).

Die genannten Wirkstoffe sind bekannt und in den genannten Veröffentlichungen oder zum großen Teil in "The Pesticide Manual", 8. Auflage, British Corp Protection Council, 1987, beschrieben. DPX-T 6376, DPX-L 5300 und DPX-M 6316 sind handelsübliche Herbizide der Firma DuPont und in "Farm Chemicals Handbook '89". (Meister Publishing Company, Willoughby, Ohio, 1989) beschrieben.

Als feste Netzmittel in den erfindungsgemäßen wasserdispergierbaren Granulaten eignen sich beispielsweise: C₁₄-C₁₉-Olefinsulfonat-Natriumsalz (z. B. ^{(R)}Hostapur OS) und Alkyldiglykoläthersulfat-Natriumsalz (z. B. ^{(R)}Genapol LRO). Die genannten Netzmittel sind im Handel erhältlich.

Gegenstand der Erfindung ist auch ein Verfahren zur Herstellung der erfindungsgemäßen wasserdispergierbaren Granulate, dadurch gekennzeichnet, daß man eine Dispersion oder Lösung der oder einiger der Komponenten a), b) und c) oder eines Teils der Komponenten in Wasser herstellt, und die Dispersion oder Lösung gegebenenfalls unter Zusatz oder Vorlage von weiteren üblichen Hilfsmitteln für die Granulierung sowie der übrigen Komponenten nach dem Gegenstrom- oder dem Gleichstromverfahren granuliert. Die erfindungsgemäßen wasserdispergierbaren Granulate können analog den anfangs genannten allgemeinen Verfahren zur Herstellung von Granulaten erhalten werden. Die wasserdispergierbaren Granulate werden vorzugsweise aus Lösungen bzw. Dispersionen durch Wirbelschicht-Granulierung, wie in EP-A 0224845 und DE-P-3909455.3 beschrieben, hergestellt.

Bezüglich der Verwendung von Kombinationen von Netzmitteln und Ammoniumsalzen ist bekannt, daß die biologische Aktivität von D,L- oder L-Glufosinate-ammonium durch Zusatz von anorganischen oder organischen Ammoniumsalzen, wie z. B. Ammonsulfat, aber auch durch Harnstoff verstärkt werden kann (vgl. EP 0036106); jedoch ist bei flüssigen Formulierungen der genannten Wirkstoffe wegen der Löslichkeitseigenschaften von Glufosinate-ammonium und Ammonsulfat nur ein begrenzter Zusatz von Ammoniumsalzen möglich. Überraschenderweise ist bei den erfindungsgemäßen Granulaten, insbesondere solchen mit D,L- und L-Glufosinate-ammonium sowie den Mischungen beider Wirkstoffe mit Diuron, Linuron, Monolinuron, Aminotriazol, Oxyfluorfen, Simazin, Diuron + Simazin und den Sulfonylharnstoffen Hoe 75032, DPX T 6376, DPX L 5300 und DPX M 6316, ein teilweiser Ersatz der festen Netzmittel durch Ammoniumsalze, wie insbesondere durch Ammonsulfat, möglich, d. h. daß ein Granulat mit guten anwendungstechnischen Eigenschaften, insbesondere auch mit hohen Salzgehalten herstellbar ist. Bevorzugt enthalten die erfindungsgemäßen wasserdispergierbaren Granulate als Bestandteil (b) ein oder mehrere der festen Netzmittel oder ein Gemisch eines Ammoniumsalzes mit einem oder mehreren der festen Netzmittel, wobei das Gewichtsverhältnis Ammoniumsalz : Netzmittel bis zu 1,5 : 1, insbesondere bis zu 1 : 1 beträgt.

Es ist überraschend, daß durch einen teilweisen Ersatz der festen Netzmittel durch Ammoniumsalze wie z. B. anorganische Ammoniumsalze, insbesondere Ammonsulfat, dieselbe biologische Aktivität erzielt werden kann, wie sie bei der entsprechenden Formulierung ohne Ammoniumsalze erreicht wird. Ein solcher Ersatz von festem Netzmittel durch Ammoniumsalze kann erhebliche Preisvorteile haben, da Ammoniumsalze, wie z. B. Ammonsulfat, erheblich billiger als feste Netzmittel sind.

Gegenstand der Erfindung ist auch die Verwendung der erfindungsgemäßen wasserdispergierbaren Granulate als Pflanzenschutzmittel, insbesondere als herbizide Mittel. Die Aufwendmenge richtet sich nach dem jeweils eingesetzten Wirkstoff und kann innerhalb weiter Grenzen varrieren; z. B. bei Herbiziden in der Regel zwischen 0,005 und 10 kg/ha Aktivsubstanz.

Die erfindungsgemäßen Granulate werden bei der Anwendung analog zu Spritzpulvern und Flüssigformulierungen mit Wasser zu einer Spritzbrühe verarbeitet (verdünnt) und als solche auf die Pflanzen oder die Anbauflächen ausgebracht. Neben besserer Dosierbarkeit, Lagerfähigkeit und anderer anwendungstechnischer Eigenschaften, wie z. B. besserer Möglichkeit zur Verpackung, weisen die so formulierten Wirkstoffe sehr gute biologische Aktivität auf, die in der Regel der biologischen Aktivität von Flüssigformulierungen entspricht oder sie sogar übertrifft.

### A. Herstellungsbeispiele

### Allgemeine Angaben zur Beurteilung und Herstellung

Die spontane **Dispergierfähigkeit** der Granulatformulierung wird nach einer Bewertungsskala von 1 bis 4 beurteilt. Zu diesem Zweck wird zunächst 1 g des Granulats in einen mit standardisiertem Wasser (30°C, 342 ppm Wasserhärte) gefüllten 1 l-Meßzylinder gegeben. Nach 1 Minute wird der Meßzylinder langsam um 180° gedreht und wieder in die Ausgangslage zurückgebracht. Dieser Vorgang wird dreimal wiederholt. Die Bewertung erfolgt nach folgendem Schema.

### Bewertungsskala

1 Alle Granulatkörner sind dispergiert.
   Falls nicht dispergierte Granulatkörper vorhanden sind, wird 2 Minuten nach Versuchsbeginn nochmals dreimal wie beschrieben umgeschüttelt und wie folgt bewertet:
2 Das Granulat ist nun vollständig dispergiert.
3 Reste des Granulats sind nicht dispergiert.
4 Das Granulat ist zum überwiegenden Teil nicht dispergiert.

Die **Schwebefähigkeit** wurde als diejenige Menge des Präparats (Gew.-%) angegeben, die sich nach Ablauf einer Sedimentationszeit von 30 Minuten in den oberen neun zehntel Volumenteilen einer Suspension befindet (siehe CIPAC-Handbook Vol. 1 (1970), S. 861).

Als **Naßsiebrückstand** wird die Substanzmenge bezeichnet, die nach 10 Minuten Spülen mit einer definierten Wassermenge auf einem Sieb von 250 µm bzw. 71 µm zurückbleibt. Eine Beschreibung der Methode ist bei "Specification for pesticides used in public health", WHO-Genf, S. 281 (1973) gegeben.

Zur Sprühtrocknung kleinerer Mengen wird ein Laborsprühtrockner Büchi 190 (Büchi Laboratoriumstechnik GmbH, Postfach 11 54, 7332 Eislingen/Fils) und zur Wirbelschichtgranulierung ein Laborwirbelbettgranulierer Büchi 710 eingesetzt.

Für Chargen bis zu 400 g Produkt wurde ein Labor-Wirbelbett, "Combi Coater", der Fa. Niro-Atomizer, verwendet. Größere Ansätze, bis zu 15 kg Produkt, wurden auf einem Wirbelbett der Fa. Glatt (GPCG 5) ausgeführt.

### Beispiel 1 (Rererenzbeispiel)

a) Dispersion zur Herstellung des Granulats
   111 g Dispersion folgender Zusammensetzung werden hergestellt:
   - 9,30 Gew.-%: D,L-Fenoxapropethyl, techn., 96,8 %ig
   - 33,45 Gew.-%: C₁₄-C₁₉-Olefinsulfonat-Na (^{(R)}Hostapur OS)
   - 0,90 Gew.-%: Entschäumer SE 2 (Entschäumer auf Silikonbasis)
   - 1,35 Gew.-%: eines Kresol-Formaldehyd-Kondensationsprodukts (Dispergiermittel Hoe S 1494)
   - 55,00 Gew.-%: Trinkwasser
   Dazu werden die Komponenten gemischt und mit Hilfe einer Perlmühle gemahlen, bis 50 % der Teilchen eine Korngröße von 2 - 3 µm aufweisen.
b) Herstellung des Granulats
   Etwa ein Drittel der unter a) hergestellten Dispersion wird sprühgetrocknet. Das so erhaltene feine Pulver wird im Laborwirbelbettgranulierer vorgelegt und durch Aufsprühen der restlichen Dispersion granuliert.
   - Trockengastemperatur:: 50 - 60°C.
   Auf diese Weise erhält man ein wasserdispergierbares Granulat folgender Zusammensetzung:
   - 20,66 Gew.-%: D,L-Fenoxapropethyl, techn., 96,8 %ig
   - 74,34 Gew.-%: C₁₄-C₁₉-Olefinsulfonat-Na (^{(R)}Hostapur OS)
   - 2,00 Gew.-%: Entschäumer SE 2
   - 3,00 Gew.-%: Dispergiermittel auf Basis eines Kresol-Formaldehyd-Kondensationsprodukts (Dispergiermittel Hoe S 1494)
   - Ausbeute:: 90,5 %
   - Teilchengröße (Granulat):: 0,8 bis 1,2 mm
   - Spontane Dispergierfähigkeit:: 1
   - Schwebefähigkeit:: 88 %

### Beispiel 2 (Referenzbeispiel)

a) Dispersion
   210 g Dispersion folgender Zusammensetzung werden hergestellt:
   - 4,96 Gew.-%: D,L-Fenoxapropethyl, techn., 96,8 %ig
   - 10,80 Gew.-%: Na-Alkyldiglykolethersulfat (^{(R)}Genapol LRO)
   - 0,24 Gew.-%: Entschäumer auf Silikon-Basis (Entschäumer SE 2)
   - 0,72 Gew.-%: Dispergiermittel auf Basis eines Kresol-Formaldehyd-Kondensationsprodukts (Dispergiermittel Hoe S 1494)
   - 7,28 Gew.-%: Aluminiumsilikat (Perlite I-206, gemahlenes Obsidiangestein)
   - 76,00 Gew.-%: Trinkwasser
   Die Komponenten werden gemischt und mit Hilfe einer Perlmühle gemahlen, bis 50 % der Teilchen eine Korngröße von 2 - 3 µm aufweisen.
b) Granulat
   Etwa ein Drittel der unter a) hergestellten Dispersion wird sprühgetrocknet. Das so erhaltene feine Pulver wird im Laborwirbelbettgranulierer vorgelegt und durch Aufsprühen der restlichen Dispersion bei einer Trockengastemperatur von 55 - 65°C granuliert.
   Es wird ein Granulat folgender Zusammensetzung erhalten:
   - 20,66 Gew.-%: D,L-Fenoxapropethyl, techn., 96,8 %ig
   - 45,00 Gew.-%: ^{(R)}Genapol LRO
   - 1,00 Gew.-%: Entschäumer SE 2
   - 3,00 Gew.-%: Dispergiermittel Hoe S 1494
   - 30,34 Gew.-%: ^{(R)}Perlite I-206
   - Ausbeute:: 73,3 %
   - Teilchengröße (Granulat):: 0,8 bis 1,3 mm
   - Spontane Dispergierfähigkeit:: 1
   - Schwebefähigkeit:: 85 %

### Beispiel 3

- 21,05 Gew.-%: Glufosinate-ammonium, 95 %ig
- 30,00 Gew.-%: ^{(R)}Genapol LRO, Trockensubstanz
- 11,97 Gew.-%: Kaolin 7a (gemahlener Ton)
- 11,98 Gew.-%: Attacote (Magnesium-Aluminiumsilikat)
- 5,00 Gew.-%: Dispergiermittel Hoe S 1494
- 10,00 Gew.-%: Calciumacetat, getrocknet (Inertstoff)
- 10,00 Gew.-%: ^{(R)}Sipernat 50 S (gefällte Kieselsäure)

Glufosinate-ammonium, Kaolin, Attacote, Calciumacetat und ^{(R)}Sipernat werden gemischt und an einer Schlagkreuzmühle gemahlen. Die so hergestellte Pulvermischung wird im Wirbelschichtgranulator vorgelegt und durch Aufsprühen einer wäßrigen Lösung von ^{(R)}Genapol LRO und Dispergiermittel Hoe S 1494 granuliert.
- Ausbeute:: 99 %
- Spontane Dispergierfähigkeit:: 3
- Schwebefähigkeit:: 99,3 %
- Teilchengröße:: 0,5 - 1,8 mm

### Beispiel 4

- 20,14 Gew.-%: Glufosinate-ammonium, 99,3 %ig
- 73,86 Gew.-%: ^{(R)}Hostapur OS
- 4,00 Gew.-%: ^{(R)}Luviskol K 30 (Bindemittel Polyvinylpyrrolidon)
- 2,00 Gew.-%: Entschäumer SE 2

Glufosinate-ammonium, ^{(R)}Hostapur OS, ^{(R)}Luviskol K 30 werden gemischt und an einer Schlagkreuzmühle gemahlen. Die so hergestellte Pulvermischung wird im Wirbelschichtgranulator vorgelegt und durch Aufsprühen einer wäßrigen Lösung des Entschäumers granuliert.
- Ausbeute:: 84,8 %
- Spontane Dispergierfähigkeit:: 1
- Schwebefähigkeit:: 99,5 %
- Teilchengröße:: 0,4 - 1,3 mm

### Beispiel 5

- 30,21 Gew.-%: Glufosinate-ammonium, 99,3 %ig
- 68,00 Gew.-%: Hostapur OS
- 2,00 Gew.-%: Entschäumer SE 2

Das pulverförmige Netzmittel wird vorgelegt. Durch Aufsprühen einer 50 %igen Wirkstofflösung wird das Granulat hergestellt.

### Beispiele 6 - 9

Bei den folgenden Beispielen 6 - 9 wird jeweils eine Mischung von pulverisiertem Na-C₁₄-C₁₉-Olefinsulfonat (^{(R)}Hostapur OS) bzw. eine Mischung davon mit Ammonsulfat vorgelegt und zur Granulierung die wäßrige Lösung von Glufosinate-ammonium aufgesprüht.

| Beispiel Nr. | 6 | 7 | 8 | 9 |
|---|---|---|---|---|
| Glufosinate-ammonium | 20 % | 20 % | 20 % | 20 % |
| ^{(R)}Hostapur OS | 78 % | 58 % | 40 % | 20 % |
| Ammonsulfat | -- | 20 % | 40 % | 60 % |
| Entschäumer SE 2 | 2 % | 2 % | -- | -- |

Die Ausbeuten sind zwischen 86 und 91 %, die spontane Dispergierfähigkeit 2 und die Schwebefähigkeit bei allen Beispielen über 99 %.

### Beispiel 10

Analog den Beispielen 1 und 2 wird ein Granulat folgender Zusammensetzung hergestellt:
- 12,00 Gew.-%: Glufosinate-ammonium
- 18,20 Gew.-%: Diuron, 99 %ig
- 16,00 Gew.-%: ^{(R)}Hostapur OS
- 12,00 Gew.-%: ^{(R)}Genapol LRO
- 0,50 Gew.-%: Entschäumer SE 2
- 5,00 Gew.-%: Natriumligninsulfonat, Sulfonierungsgrad 0,17 (^{(R)}Vanisperse CB)
- 35,30 Gew.-%: Kaolin 1777
- 1,00 Gew.-%: Restfeuchte;
- Schwebefähigkeit:: 99 %,
kein Naßsiebrückstand auf 250 µm-Sieb

### Beispiel 11

Analog den Beispielen 1 und 2 wird ein Granulat folgender Zusammensetzung hergestellt:
- 12,00 Gew.-%: Glufosinate-ammonium
- 18,20 Gew.-%: Diuron, 99 %ig
- 28,00 Gew.-%: ^{(R)}Hostapur OS
- 5,00 Gew.-%: ^{(R)}Rapidamin Reserve C
- 0,50 Gew.-%: Entschäumer SE 2
- 35,30 Gew.-%: Kaolin 1777
- 1,00 Gew.-%: Wasser
- Schwebefähigkeit:: 95 %
Kein Naßsiebrückstand auf 250 µm-Sieb

### Beispiel 12

Analog Beispielen 1 und 2 wird ein Granulat folgender Zusammensetzung erhalten:
- 10,00 Gew.-%: Glufosinate-ammonium
- 16,70 Gew.-%: Linuron, 95,8 %ig
- 25,00 Gew.-%: ^{(R)}Hostapur OS
- 5,00 Gew.-%: ^{(R)}Rapidamin Reserve C
- 0,50 Gew.-%: Entschäumer SE 2
- 41,80 Gew.-%: Kaolin 1777
- 1,00 Gew.-%: Restfeuchte
- Schwebefähigkeit:: 97 %
Kein Naßsiebrückstand auf 250 µm-Sieb

### B. Biologische Beispiele

Samen bzw. Rhizomstücke von mono- und dikotylen Unkräutern bzw. Samen von Kulturpflanzen werden in Plastiktöpfen in sandigem Lehmboden ausgelegt, mit Ende abgedeckt und im Gewächshaus unter guten Wachstumsbedingungen angezogen. Drei Wochen nach der Aussaat werden die Versuchspflanzen im Dreiblattstadium behandelt.

Die wasserdispergierbaren Granulate, Spritzpulver bzw. wäßrige Lösungen werden in verschiedenen Dosierungen mit einer Wasseraufwandmenge von umgerechnet 200 bis 800 l/ha auf die grünen Pflanzenteile gesprüht und nach der angegebenen Standzeit der Versuchspflanzen im Gewächshaus unter optimalen Wachstumsbedingungen die Wirkung der Präparate optisch im Vergleich zu unbehandelten Kontrollen bonitiert.

### 1. Vergleich einer Elüssigformulierung von Glufosinate-ammonium (SL) mit zwei wasserdispergierbaren Granulaten (WG) von Glufosinate-ammonium gemäß vorliegender Erfindung.

| Produkt | Aufwandmenge | % Wirkung bei Commelina communis | | |
|---|---|---|---|---|
| | | 11 | 14 | 21 |
| | | Tage nach Applikation | | |
| Glufosinate-ammonium SL (20 %ig) | 2 l/ha | 40 | 71 | 70 |
| | 3 l/ha | 40 | 75 | 80 |
| WG nach Beispiel 3 | 2 kg/ha | 50 | 61 | 73 |
| | 3 kg/ha | 70 | 91 | 99 |
| WG nach Beispiel 4 | 2 kg/ha | 50 | 58 | 55 |
| | 3 kg/ha | 60 | 88 | 97 |
| SL = wäßrige Lösung | | | | |

### 2. Vergleich von Tankmischungen aus einer Flüssigformulierung von Glufosinate-ammonium (SL) und Spritzpulverformulierungen von Linuron bzw. Diuron mit den entsprechenden WG-Formulierungen.

| Produkt | Aufwandmenge l bzw.kg/ha | % Wirkung 18 Tage n. Applikation | | |
|---|---|---|---|---|
| | | VF | LOM | HV |
| Tankmischung Glufosinate-ammonium SL (20 %ig) + Linuron WP (48,5 %ig) | 0,156 + 0,11 | 42 | 47 | 0 |
| | 0,3125 + 0,21 | 50 | 85 | 38 |
| | 0,625 + 0,42 | 83 | 100 | 78 |
| | 1,25 + 0,84 | 99 | 100 | 95 |
| | 2,5 + 1,68 | 100 | 100 | 100 |
| | 5,0 + 3,37 | 100 | 100 | 100 |
| WG nach Beispiel 12 | 0,312 | 40 | 63 | 13 |
| | 0,625 | 62 | 82 | 50 |
| | 1,25 | 85 | 100 | 77 |
| | 2,5 | 96 | 100 | 99 |
| | 5,0 | 99 | 100 | 100 |
| | 10,0 | 100 | 100 | 100 |
| Tankmischung Glufosinate-ammonium SL (20 %ig) + Diuron WP (80 %ig) | 0,156 + 0,0586 | 33 | 58 | 32 |
| | 0,31 + 0,117 | 48 | 73 | 48 |
| | 0,625 + 0,235 | 80 | 96 | 92 |
| | 1,25 + 0,469 | 90 | 100 | 98 |
| | 2,5 + 0,938 | 100 | 100 | 100 |
| | 5,0 + 1,875 | 100 | 100 | 100 |
| WG nach Beispiel 11 | 0,26 | 35 | 45 | 32 |
| | 0,52 | 62 | 77 | 68 |
| | 1,04 | 85 | 100 | 85 |
| | 2,08 | 93 | 100 | 100 |
| | 4,17 | 99 | 100 | 100 |
| | 8,33 | 99 | 100 | 100 |
| WG nach Beispiel 10 | 0,26 | 43 | 33 | 28 |
| | 0,52 | 65 | 88 | 80 |
| | 1,04 | 85 | 98 | 90 |
| | 2,08 | 96 | 100 | 100 |
| | 4,17 | 99 | 100 | 100 |
| | 8,33 | 100 | 100 | 100 |
| l bzw. kg/ha = l/ha bei SL und kg/ha bei WG WP = Spritzpulver SL = wäßrige Lösung VF = Vicia faba (Ackerbohne) LOM = Lolium multiflorum (Raygras) HV = Hordeum vulgare (Gerste) | | | | |

### 3. Vergleich von Glufosinate-ammonlum-WG-Formulierungen, bei denen in steigenden Mengen Netzmittel durch Ammoniumsulfat ersetzt wurde.

| Herstellungsbeispiel Nr. | 6 | 7 | 8 | 9 |
|---|---|---|---|---|
| Glufosinateammonium | 20 % | 20 % | 20 % | 20 % |
| Hostapur OS | 78 % | 58 % | 40 % | 20 % |
| Ammonsulfat | -- | 20 % | 40 % | 60 % |
| herbizide Wirkung bei Gerste | = | = | = | < |
| Dabei bedeutet: = gleiche Wirkung wie Glufosinate-ammonium SL (20 %) < etwas geringere Wirkung wie Glufosinate-ammonium SL (20 %) | | | | |

## Patentansprüche (Patentansprüche für folgende(n) Vertragsstaat(en): AT, BE, CH, DE, DK, FR, GB, GR, IT, LI, LU, NL, SE)

1. Wasserdispergierbare, nach dem Gleich- oder dem Gegenstromverfahren hergestellte Granulate, welche
a) 10 bis 80 % D, L-Glufosinate-ammonium oder L-Glufosinate-ammonium oder Mischungen dieser Wirkstoffe mit Diuron, Linuron, Monolinuron, Aminotriazol, Oxyfluorfen, Simazin, Diuron + Simazin oder den Sulfonylharnstoffen Hoe 75032, DPX T 6376, DPX L 5300 oder DPX M 6316;
b) 20 - 85 Gew.-% eines oder mehrerer fester Netzmittel aus der Gruppe enthaltend C₁₄-C₁₉ -Olefinsulfonat und Alkyldiglykolethersulfat oder eines Gemisches aus Ammoniumsulfat und einem oder mehreren der vorstehenden festen Netzmittel; und
c) 0 bis 15 Gew.-% üblicher Formulierungsmittel, insbesondere aus der Gruppe der Inertstoffe, Füllmittel, Dispergiermittel, Bindemittel, Netzmittel, Penetrationsförderer, Klebmittel, Haftmittel und Antischaummittel
enthalten.

2. Granulate gemäß Anspruch 1, welche 20 bis 80 % D,L-Glufosinate-ammonium oder L-Glufosinate-ammonium enthalten.

3. Granulate nach Anspruch 1 oder 2, welche festes Netzmittel und Ammoniumsalz im Gewichtsverhältnis Ammoniumsalz : Netzmittel bis zu 1,5 : 1 enthalten.

4. Granulate nach Anspruch 3, worin das Gewichtsverhältnis bis zu 1 : 1 beträgt.

5. Verfahren zur Herstellung der in Anspruch 1 definierten wasserdispergierbaren Granulate, dadurch gekennzeichnet, daß man eine Dispersion oder Lösung der oder einiger der Komponenten a), b) und c) oder eines Teils der Komponenten in Wasser herstellt und die Dispersion oder Lösung gegebenenfalls unter Zusatz oder Vorlage von weiteren üblichen Hilfsmitteln für die Granulierung sowie der übrigen Komponenten nach dem Gegenstrom- oder dem Gleichstromverfahren granuliert.

6. Verwendung der nach einem oder mehreren der Ansprüche 1 bis 4 definierten wasserdispergierbaren Granulate zur Herstellung einer Spritzbrühe.

## Patentansprüche (Patentansprüche für folgende(n) Vertragsstaat(en): ES)

1. Verfahren zur Herstellung von wasserdispergierbaren Granulaten, welche
a) 10 bis 80 %, D,L-Glufosinate-ammonium oder L-Glufosinate-ammonium oder Mischungen dieser Wirkstoffe mit Diuron, Linuron, Monolinuron, Aminotriazol, Oxyfluorfen, Simazin, Diuron + Simazin oder den Sulfonylharnstoffen Hoe 75032, DPX T 6376, DPX L 5300 oder DPX M 6316;
b) 20 - 85 Gew.-% eines oder mehreren fester Netzmittel aus der Gruppe enthaltend C₄-C₁₉ -Olefinsulfonat und Alkyldiglykolethersulfat oder eines Gemisches aus Ammoniumsulfat und einem oder mehreren der vorstehenden festen Netzmittel; und
c) 0 bis 15 Gew.-% üblicher Formulierungsmittel, insbesondere aus der Gruppe der Inertstoffe, Füllmittel, Dispergiermittel, Bindemittel, Netzmittel, Penetrationsförderer, Klebmittel, Haftmittel und Antischaummittel
enthalten, dadurch gekennzeichnet, daß man eine Dispersion oder Lösung der oder einiger der Komponenten a), b) und c) oder eines Teils der Komponenten in Wasser herstellt und die Dispersion oder Lösung gegebenenfalls unter Zusatz oder Vorlage von weiteren üblichen Hilfsmitteln für die Granulierung sowie der übrigen Komponenten nach dem Gegenstrom- oder dem Gleichstromverfahren granuliert.

2. Verfahren gemäß Anspruch 1, dadurch gekennzeichnet, daß man Granulate herstellt, welche 20 bis 80 % D,L-Glufosinate-ammonium oder L-Glufosinate-ammonium enthalten.

3. Verfahren nach Anspruch 1 oder 2, dadurch gekennzeichnet, daß man Granulate herstellt, welche festes Netzmittel und Ammoniumsalz im Gewichtsverhältnis Ammoniumsalz : Netzmittel bis zu 1,5 : 1 enthalten.

4. Verfahren gemäß Anspruch 3, dadurch gekennzeichnet, daß man Granulate herstellt, worin das Gewichtsverhältnis bis zu 1 : 1 beträgt.

5. Verwendung der nach einem oder mehreren der Ansprüche 1 bis 4 definierten wasserdispergierbaren Granulate zur Herstellung einer Spritzbrühe.

## Claims (Claims for the following Contracting State(s): AT, BE, CH, DE, DK, FR, GB, GR, IT, LI, LU, NL, SE)

1. Water-dispersible granules, prepared using the cocurrent or countercurrent process, which contain
a) 10 to 80 % of D,L-glufosinate-ammonium or L-glufosinate-ammonium or mixtures of these active substances with diuron, linuron, monolinuron, aminotriazole, oxyfluorfen, simazine, diuron + simazine or the sulfonylureas Hoe 75032, DPX T 6376, DPX L 5300 or DPX M 6316;
b) 20 - 85 % by weight of one or more solid wetting agents from the group containing C₁₄-C₁₉-olefinsulfonate and alkyldiglycol ether sulfate or of a mixture of ammonium and one or more of the above solid wetting agents; and
c) 0 to 15 % by weight of customary formulation agents, in particular from the group of the inert substances, fillers, dispersants, binders, wetting agents, penetrants, tackifiers, adhesives and antifoam agents.

2. The granules as claimed in claim 1, which contain 20 to 80 % of D,L-glufosinate-ammonium or L-glufosinate-ammonium.

3. The granules as claimed in claim 1 or 2, which contain solid wetting agent and ammonium salt in the ratio by weight of ammonium salt:wetting agent of up to 1.5:1.

4. The granules as claimed in claim 3, wherein the ratio by weight is up to 1:1.

5. A process for preparing the water-dispersible granules defined in claim 1, which comprises preparing a dispersion or solution of the, or of some of the, components a), b) and c), or of part of the components, in water, and granulating the dispersion or solution using the countercurrent or cocurrent process, if appropriate with the addition or initial introduction of further customary granulation auxiliaries and of the remaining components.

6. The use of the water-dispersible granules as defined in one or more of claims 1 to 4 to prepare a spray liquor.

## Claims (Claims for the following Contracting State(s): ES)

1. A process for preparing water-dispersible granules which contain
a) 10 to 80 % D,L-glufosinate-ammonium or L-glufosinate-ammonium or mixtures of these active substances with diuron, linuron, monolinuron, aminotriazole, oxyfluorfen, simazine, diuron + simazine or the sulfonylureas Hoe 75032, DPX T 6376, DPX L 5300 or DPX M 6316;
b) 20 - 85 % by weight of one or more solid wetting agents from the group containing C₁₄-C₁₉-olefinsulfonate and alkyldiglycol ether sulfate or of a mixture of ammonium sulfate and one or more of the above solid wetting agents; and
c) 0 to 15 % by weight of customary formulation agents, in particular from the group of the inert substances, fillers, dispersants, binders, wetting agents, penetrants, tackifiers, adhesives and antifoam agents, which comprises preparing a dispersion or solution of the, or of some of the, components a), b) and c), or of part of the components, in water, and granulating the dispersion or solution using the countercurrent or cocurrent process, if appropriate with the addition or initial introduction of further customary granulation auxiliaries and of the remaining components.

2. The process as claimed in claim 1, wherein granules are prepared which contain 20 to 80 % of D,L-glufosinate-ammonium or L-glufosinate-ammonium.

3. The process as claimed in claim 1 or 2, wherein granules are prepared which contain solid wetting agent and ammonium salt in the ratio by weight of ammonium salt:wetting agent of up to 1.5:1.

4. The process as claimed in claim 3, wherein granules are prepared in which the ratio by weight is up to 1:1.

5. The use of the water-dispersible granules as defined in one or more of claims 1 to 4 to prepare a spray liquor.

## Revendications (Revendications pour l'(les) Etat(s) contractant(s) suivant(s): AT, BE, CH, DE, DK, FR, GB, GR, IT, LI, LU, NL, SE)

1. Granulés dispersibles dans l'eau, préparés selon le procédé à courant parallèle ou le procédé à contrecourant, lesquels contiennent :
(a) 10 à 80 % de D,L-glufosinate d'ammonium ou de L-glufosinate d'ammonium ou de mélanges de ces substances actives avec le diuron, le linuron, le monolinuron, l'aminotriazole, l'oxyfluorfène, la simazine, le diuron + simazine ou les sulfonylurées Hoe 75032, DPX T 6376, DPX L 5300 ou DPX M 6316 ;
(b) 20 à 85 % en poids d'un ou de plusieurs agents mouillants solides du groupe contenant de l'oléfine(en C₁₄-C₁₉)-sulfonate et de l'alkyldiglycoléthersulfate ou d'un mélange de sulfate d'ammonium et d'un ou plusieurs des agents mouillants solides ci-dessus ; et
(c) 0 à 15 % en poids d'agents de formulation usuels, en particulier du groupe des substances inertes, des agents de remplissage, des dispersants, des liants, des agents mouillants, des agents favorisant la pénétration, des agglutinants, des agents d'adhérence et des agents antimousse.

2. Granulés selon la revendication 1, qui contiennent 20 à 80 % de D,L-glufosinate d'ammonium ou de L-glufosinate d'ammonium.

3. Granulés selon la revendication 1 ou 2, qui contiennent de l'agent mouillant et du sel d'ammonium dans la proportion en poids sel d'ammonium:agent mouillant allant jusqu'à 1,5:1.

4. Granulés selon la revendication 3, dans lesquels la proportion en poids va jusqu'à 1:1.

5. Procédé de préparation des granulés dispersibles dans l'eau définis dans la revendication 1, caractérisé en ce qu'on prépare une dispersion ou une solution des composants a), b) et c) ou de certains d'entre eux, ou d'une partie des composants dans l'eau et en ce qu'on granule la dispersion ou la solution selon le procédé à contre-courant ou selon le procédé à courant parallèle, éventuellement avec addition ou introduction préalable d'autres adjuvants usuels pour la granulation ainsi que des autres composants.

6. Utilisation des granulés dispersibles dans l'eau définis selon une ou plusieurs des revendications 1 à 4 pour la préparation d'un bouillon de pulvérisation.

## Revendications (Revendications pour l'(les) Etat(s) contractant(s) suivant(s): ES)

1. Procédé de préparation de granulés dispersibles dans l'eau, lesquels contiennent :
(a) 10 à 80 % de D,L-glufosinate d'ammonium ou de L-glufosinate d'ammonium ou de mélanges de ces substances actives avec le diuron, le linuron, le monolinuron, l'aminotriazole, l'oxyfluorfène, la simazine, le diuron + simazine ou les sulfonylurées Hoe 75032, DPX T 6376, DPX L 5300 ou DPX M 6316 ;
(b) 20 à 85 % en poids d'un ou de plusieurs agents mouillants solides du groupe contenant de l'oléfine(en C₁₄-C₁₉)-sulfonate et de l'alkyldiglycoléthersulfate ou d'un mélange de sulfate d'ammonium et d'un ou plusieurs des agents mouillants solides ci-dessus ; et
(c) 0 à 15 % en poids d'agents de formulation usuels, en particulier du groupe des substances inertes, des agents de remplissage, des dispersants, des liants, des agents mouillants, des agents favorisant la pénétration, des agglutinants, des agents d'adhérence et des agents antimousse,
caractérisé en ce qu'on prépare une dispersion ou une solution des composants a), b) et c) ou de certains d'entre eux, ou d'une partie des composants dans l'eau et en ce qu'on granule la dispersion ou la solution selon le procédé à contre-courant ou selon le procédé à courant parallèle, éventuellement avec addition ou introduction préalable d'autres adjuvants usuels pour la granulation ainsi que des autres composants.

2. Procédé selon la revendication 1, caractérisé en ce qu'on prépare des granulés qui contiennent 20 à 80 % de D,L-glufosinate d'ammonium ou de L-glufosinate d'ammonium.

3. Procédé selon la revendication 1 ou 2, caractérisé en ce qu'on prépare des granulés qui contiennent de l'agent mouillant solide et du sel d'ammonium dans la proportion en poids sel d'ammonium:agent mouillant allant jusqu'à 1,5:1.

4. Procédé selon la revendication 3, caractérisé en ce qu'on prépare des granulés dans lesquels la proportion en poids va jusqu'à 1:1.

5. Utilisation des granulés dispersibles dans l'eau définis selon une ou plusieurs des revendications 1 à 4 pour la préparation d'un bouillon de pulvérisation.
